# EUROPEAN PATENT SPECIFICATION

(11) **EP 3 168 373 B1**
(45) Date of publication and mention of the grant of the patent: **10.07.2019**
(21) Application number: 16199191.4
(22) Date of filing: 14.11.2014
(51) Int. Cl.: E02F 9/26, B62D 15/00, G06T 11/60, E02F 9/20, E02F 9/24, E02F 3/96, G01S 13/86, G01S 13/88

(54) **A MACHINE WITH A SYSTEM FOR IMPROVING SAFETY**
EINE MASCHINE MIT EINEM SYSTEM ZUR VERBESSERUNG DER SICHERHEIT
UN OUTIL MOBILE AVEC UN SYSTÈME POUR AMÉLIORER LA SÉCURITÉ

(43) Date of publication of application: 17.05.2017
(62) Divisional of application: 14193345.7
(73) Proprietor: Caterpillar Inc., Deerfield, Illinois 60015 (US)
(72) Inventor: CONWAY, Simon, Leamington Spa, Warwickshire CV31 1JL (GB); BRITTEN-AUSTIN, R. Neil, Leicester, Leicestershire LE9 2HD (GB); ABI-KARAM, Elie, Narborough, Leicestershire LE19 3EF (GB); SMITH, Sage, Apex, NC 27502 (US)
(74) Representative: BRP Renaud & Partner mbB Rechtsanwälte Patentanwälte Steuerberater

(56) References cited:
- EP-A2- 2 562 312
- WO-A1-2012/116408
- WO-A1-2014/148202
- JP-A- H11 140 911
- US-A- 5 938 710
- US-A1- 2005 261 799
- US-A1- 2013 222 573
- Continental: "Driver assistance systems for trucks can significantly reduce the risk of an accident", Continental , 23 September 2008 (2008-09-23), XP002738967, Retrieved from the Internet: URL:http://www.continental-corporation.com /www/pressportal_com_en/themes/press_relea ses/3_automotive_group/chassis_safety/pres s_releases/fahrassistent_23_09_2008_en.htm l [retrieved on 2015-04-24]

## Description

### Technical Field

The disclosure relates to the field of machines of a kind comprising a body and an implement movable relative to the body.

### Background

A user of a machine of the kind having a machine body and an implement movable relative to the machine body can see directly from only one perspective at any one time. As such, an implement movable relative to the machine body may be visible to a user from only one perspective, such as a rear or side of the implement rather than, for example, from a front of the implement. Accordingly, when precise control of the position of the implement is necessary, a user may require additional information in order to position the implement accurately, particularly in respect of a part of the implement that is not directly visible to the user. Such assistance may be provided, for example, by a camera or by a colleague at a distance from the machine.

Even if a user has assistance of a colleague or from a camera, the user still needs to be able to make judgements about a future position of the implement in order to be able to adjust their control of the ground propulsion of the machine and/or their control of the position of the implement relative to the machine body in order to ensure that the implement arrives at the desired location relative, for example, to an article to be contacted by the implement.

A user may, over time, develop sufficient experience and familiarity to be able to infer a position of a part of an implement that is not directly visible to them. With yet further experience, a user may be able to make judgements regarding a future position of the implement on the basis of various control inputs and how to influence that future position by altering one or more control inputs.

The following documents all disclose features that provide assistance for controlling either machines with implement attachments or vehicles: EP 2562312; US 2013/222573;

JP H11 140911; WO 2014/148202; US 2005/261799; WO 2012/116408; and US 5938710. Against this background, there is provided a system for improving safety in use of a machine of a kind comprising a body and an implement movable relative to the body.

### Summary of the disclosure

The invention is defined by appended independent claim 1, namely:
A machine of a kind comprising a body and an implement, the machine comprising a system configured to define a safety zone in the vicinity of the implement, the system comprising:
a processor configured to receive a plurality of system inputs and to deliver a system output comprising criteria that define a position and one or more dimensions of the safety zone; and
wherein the plurality of system inputs comprises:
   (a) first system input data relating to a type and/or a dimension of the implement;
   (b) second system input data relating to a current position of the implement;
   (c) third system input data relating to user input control of a first type that governs ground propulsion of the machine; and
   (d) fourth system input data relating to user input control of a second type that governs movement of the implement relative to the body and operation of the implement;
wherein the processor is configured to process the plurality of system inputs in order to determine the system output, wherein the system output represents guidance in relation to a future trajectory of the safety zone, wherein the future trajectory is calculated based on current system input data,
characterized in that,
the machine further comprising a data library including data corresponding to values for each of the first, second and third system input data and, for each combination of input data values, a corresponding output data value, wherein the step of processing the plurality of inputs in order to determine the system output comprises searching the data library for an output data value that corresponds with the first, second and third system input data values.

Further aspects of the disclosure are set out in the dependent claims.

### Brief description of the drawings

Specific embodiments of the disclosure will now be described, by way of example only, with reference to the accompanying drawings in which:
Figure 1 shows a schematic illustration of a machine having as an implement a loader bucket, in which machine an embodiment of the system of the present disclosure may be employed;
Figure 2 shows a schematic illustration of a machine having as an implement a fork attachment, in which machine an embodiment of the system of the present disclosure may be employed;
Figure 3 shows a schematic illustration of a machine, specifically an excavator with a grapple attachment, in which an embodiment of the system of the present disclosure may be employed;
Figure 4 shows a schematic illustration of a machine, specifically an excavator with a grapple attachment, in which an embodiment of the system of the present disclosure may be employed;
Figure 5 shows a schematic illustration of a machine, specifically a track-type tractor having a front blade, in which an embodiment of the system of the present disclosure may be employed;
Figure 6 shows a schematic view from above of the machine of Figure 5 showing the front blade in a first configuration;
Figure 7 shows a schematic view from above of the machine of Figure 5 showing the front blade in a second configuration;
Figure 8 shows a schematic view from above of the machine of Figure 5 showing the front blade in a third configuration;
Figure 9 shows various implements, 9a to 9f, that may be compatible with an embodiment of the system of the disclosure;
Figure 10 shows a bird's eye schematic representation of a view that may be presented to a user on a display on which are superimposed various trajectories computed by a processor on the basis of sensed inputs;
Figure 11 shows a bird's eye schematic representation of a view that may be presented to a user on a display on which is superimposed an attachment safety zone;
Figure 12 shows various implements, 12a to 12c, that may be compatible with an embodiment of the system of the disclosure;
Figure 13 shows two saw implements, 13a and 13b, that may be compatible with an embodiment of the system of the disclosure;
Figure 14 shows a skid steer loader having a brushcutter as its implement;
Figure 15 shows a skid steer loader having an auger as its implement;
Figure 16 shows a schematic representation of a view that may be displayed to a user showing a trajectory of fork tips relative to a surrounding environment;
Figure 17 shows a schematic representation of a view that may be displayed to a user showing information regarding a current position of an implement;
Figure 18 shows a view provided by a camera of an implement including an alphanumeric indicator associated with the implement for assisting in identification of the implement by an embodiment of a system of the present disclosure;
Figure 19 shows a view provided to a display from a camera mounted on an implement, such as a grapple, having two opposing jaws movable relative to one another ;and
Figure 20 shows a view of a machine showing examples of inputs that may be used by a system in accordance with the disclosure.

### Detailed description

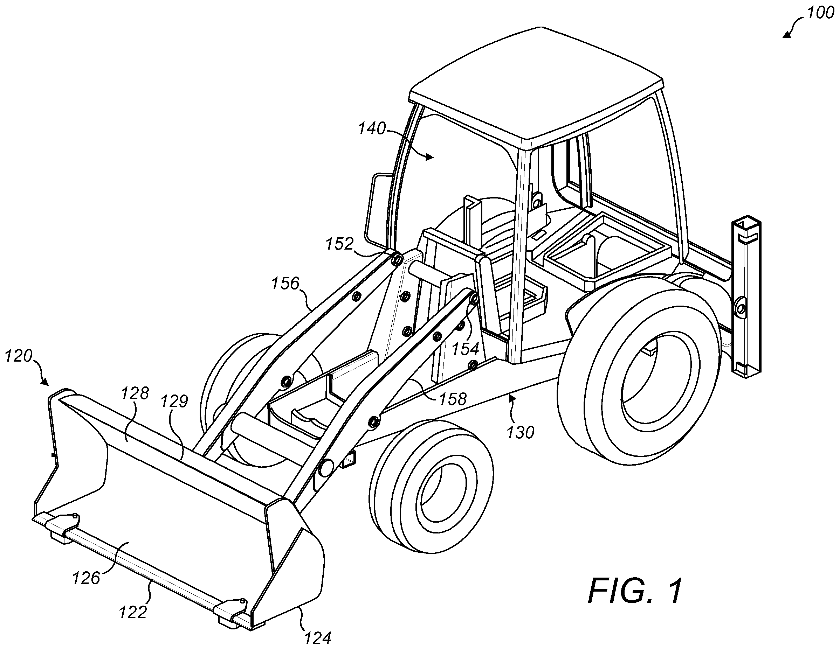

In a first embodiment, the system of the present disclosure may be employed in the context of a machine 100, a schematic illustration of which is shown in Figure 1. For ease of explanation, some features of the machine 100 are not shown in the schematic representation of Figure 1.

The machine 100 may comprise a body 130 having a cab 140. The machine 100 may also comprise, as one of many options for implements, a loader bucket 120 at a front end of the machine that is movable relative to the body 130. While the illustrated embodiment shows a loader bucket 120, the implement may be interchangeable with a number of alternative implements.

Movement of the machine 100 and of the implement 120 is controllable by a user in the cab 140. A user may thereby control both ground propulsion of the machine and movement of the implement 120 relative to the body 130.

Ground propulsion of the machine 100 may be governed by devices and techniques that are well known in the art. In the case of the machine 100 of Figure 1, ground propulsion is effected by four wheels. For example, movement of the machine forwards and backwards may be through delivering power from an engine of the machine to one or more of the four wheels of the machine via a gearbox. The user may control such using a combination of devices located inside the cab including accelerator pedal, brake pedal, clutch and gear shift stick. Movement of the machine 100 left and right may be governed by rotating the front wheels relative to a longitudinal direction of the body of the machine whilst the machine is moving forward or backwards. The user may control movement of the front wheels left or right by moving a steering wheel located inside the cab 140.

Movement of the implement 120 relative to the body 130 may, for example, be actuated hydraulically and controlled by one or more levers that may be located in the cab 140 such that a user can operate them from the same position or a similar position as that for operating the controls that govern ground propulsion. Depending on the nature of the implement 120 and the mechanism of connection to the body 130 of the machine 100, the implement 120 may be controllable to move relative to the body 130 of the machine 100 with multiple degrees of freedom. The implement 120 of Figure 1 may be connected to the body 130 via a pair of arms 156, 158 that are each pivotally connected at a proximal end thereof to the body of the machine at a pair of pivots 152, 154. The pivots 152, 154 may share a common axis. The implement 120 may be connected to a distal end of each arm 156, 158 via a pair of further pivots (not shown in Figure 1).

In the Figure 1 embodiment, the implement may be a loader bucket 120. A height of the loader bucket 120 relative to the body 130 of the machine 100 (and hence, indirectly, relative to the surrounding ground) may be governed by an angle of the pair or arms 156, 158 at the first pair of pivots 152, 154. An angle of the loader bucket 120 may be governed both by (a) the angle of the pair of arms 156, 158 at the first pair of pivots 152, 154 and (b) the angle of the loader bucket 120 relative to the pair of arms at a second pair of pivots (not shown). For the purposes of this description, when discussing an angle of the pair of arms 156, 158, unless otherwise stated, this refers to an angle relative to the body 130. Also for the purposes of this description, the loader bucket 120 may be described as horizontal when a bottom surface 126 of the loader bucket 120 is parallel to a plane defined by the surrounding ground on which the wheels of the machine are situated. The loader bucket 120 may be described as having a downward angle when the bottom surface 126 of the loader bucket 120 is tipped forwards relative to the machine 100 such that contents of the loader bucket 120 may fall under gravity from a front opening of the loader bucket 120. Conversely, the loader bucket 120 may be described as having an upward angle when the bottom surface of the loader bucket 120 is tipped rearwards relative to the machine 100 such that contents of the bucket may are prevented from falling under gravity from the loader bucket 120.

It will be appreciated that, for many combinations of arm angles and loader bucket angles, a front edge 122 of the loader bucket 120 is not visible to a user sitting in the cab 140 of the machine 100. For other combinations of arm angles and loader bucket angles where a front edge 122 of the loader bucket 120 is visible to a user sitting in the cab 140 of the machine 100, other features of the loader bucket 120, such as a top edge of the loader bucket 120 may not be visible to the user. Furthermore, since for many implements, including a loader bucket 120, there are further degrees of freedom, including the possibility of changing an angle between the bottom surface 126 of the bucket and a rear surface 128 of the bucket, there are further aspects of the implement and its position that may not be visible to the user when at certain angles.

The system may comprise one or more sensors, a processor and a display visible to a user in the cab of the machine 100.

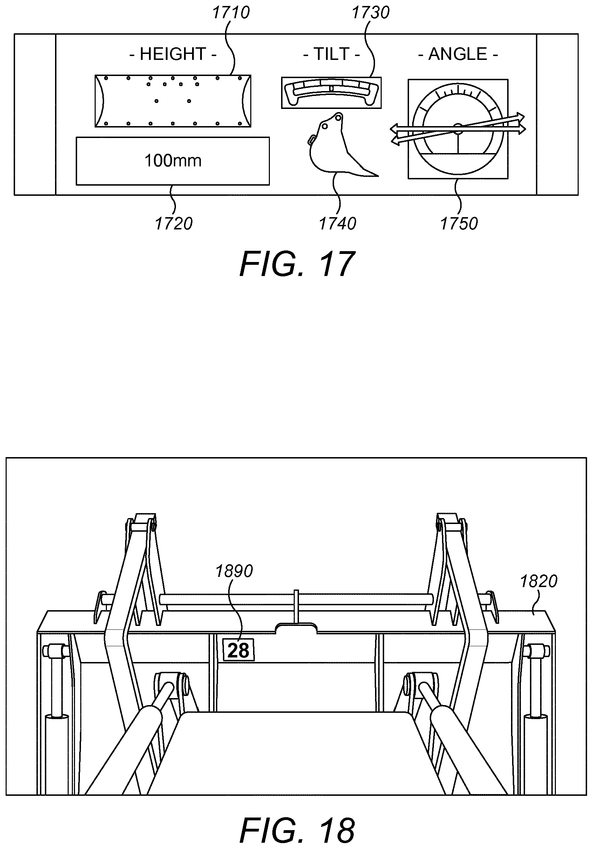

In the embodiment of Figure 1, the sensors may comprise a first camera (not shown) installed on the machine. The sensors may comprise further cameras. The first camera may be configured to obtain within its field of view an image of some or all of the implement. (An example of such a view is given in Figure 18.) The processor may be equipped to run image processing software that may be configured to recognise from the image a subset of the image showing an alphanumeric characters 1890, or similar, displayed on the implement 1820 in order to obtain, from a data library or similar, data associated with an implement having that alphanumeric characters 1890. For example, the data may include the type of implement (e.g., bucket, forks, broom, blade or any other implement known in the art) as well as its dimensions and other features of the implement including, for example, degrees of freedom, potential for opening and closing opposing jaws, or other movement of a part of an implement relative to another part of the implement.

The data library may be any source of data, including a source of data located within the processor or a source of data located remotely from the processor and perhaps accessed wirelessly over the internet or by other means.

The image processing software may be further configured to detect a reference point or points of the implement 120 and a reference point or points of the body 130 in order to determine a position of an implement 120 reference point relative to a body 130 reference point.

Having determined a position of at least one reference point on the implement 120 as well as details of the implement type and size from the data library, these two sets of data may be used by the image processing software to determine implement position data in respect of a wider range of reference points, perhaps including reference points that are not within the field of vision of the camera.

The display (not shown in Figure 1) may be any form of display device. It may be, for example, a conventional emissive display (such as, for example, an LCD, LED, OLED or any other display device) mounted at a convenient place in the cab 140 of the machine 100. In an alternative, the display may comprise a projector device configured to project onto, for example, a windscreen/windshield of the cab 140. The display may be integrated with other instruments in the cab 140, perhaps on manufacture of the machine 100, or may be fitted subsequently and simply mounted at any convenient location. Alternatively, the display may be a head-up display, an optical head-mounted display or other wearable technology. Any display that is viewable by a user may be suitable.

The display may be configured to display a live view of at least a part of the implement in the context of its surroundings. The live view may be that obtained by the first camera or another camera. Alternatively, the live view may be schematic in nature and may be generated from data derived from one or multiple cameras or other data derived from one or more other sensors.

In some embodiments, the display may not provide either a live view of an image or a schematic representation of a view. Rather, it may simply superimpose information (such as guidance or trajectory information) over a user's view. For example, in an embodiment involving a head-up display, guidance or trajectory information may be provided as an overlay of the actual view of the environment as seen by the user.

It is possible that the live view may be from an angle different to any and all of the cameras. For example, rather than having a camera located at a distance above the machine in order to obtain a direct bird's eye view, the live view may be a schematic bird's eye representation of the machine and implement in its surroundings assimilated from data obtained from a plurality of cameras or sensors whose field of vision or field of sensing may project outwardly from the machine 100. Such an assimilated schematic bird's eye view may be particularly useful in providing information to the user regarding how to position the machine (e.g., how to control the ground propulsion of the machine) relative to one or more articles in the surrounding environment, possibly before moving the implement 120 relative to the body 130.

The image processing software may be configured to superimpose onto the view a representation of one or more aspects of the implement that may not be visible to a user of the machine in the cab. For example, a front edge 122 of a loader bucket 120, as in the embodiment of Figure 1, may not be visible to a user in the cab 140 of the machine 100 (see Figure 18). The image processing software may provide an indication of a current position of a front edge of the implement 120 in the context of the implement and machine, together with surrounding artefacts. This might be shown, for example, in the bird's eye view.

The display may instead or in addition provide raw data relating to a position of the implement rather than a view. For example, the display may show a height of the front edge of the bucket loader relative to the ground or relative to a reference position on the body 130. It may show a tilt angle of the bucket loader relative to a longitudinal horizontal direction and an angle of the bucket loader relative to a transverse horizontal direction. These might be displayed as one or more numerical values, perhaps also with icons and perhaps also with a colour-coded representation to signify appropriate (e.g., green) and inappropriate (e.g., red) values. One example of a display showing such information is shown in Figure 17.

In addition to representing present machine and implement position data, the system of the present disclosure may be used to provide the user with predictive information regarding a future position of the implement.

In one arrangement of such a predictive implementation, the processor may predict a future position of the machine and the implement on the basis of current sensor inputs. The processor may predict a future position initially assuming current sensor inputs are maintained at constant levels. Further functionality may react to a change in sensor inputs to update a predicted future position of the implement. The more input data that is provided, the more variables there may be when predicting a future position.

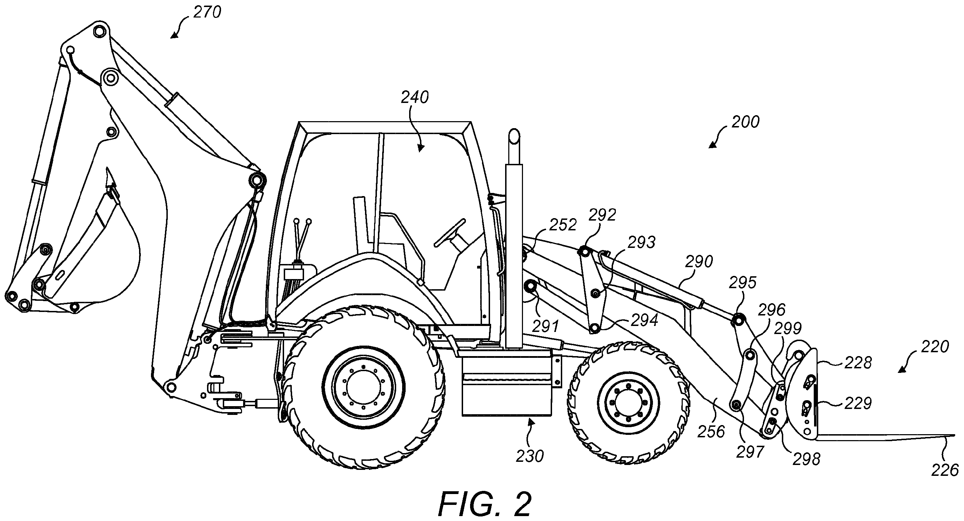

Figure 2 shows a schematic representation of a machine 200 known in the art as a backhoe loader. Such a machine 200 may comprise a body 230, a cab 240, a first implement 220 at a front end of the machine that is movable relative to the body 230 and a second implement 270 at a back end of the machine 200 that is also movable relative to the body 230. The machine 200 and its implements 220, 270 may be operable by a user in the cab 240. A user may thereby control both ground propulsion of the machine 200 and movement of the implements 220, 270 relative to the body 230.

The machine 200 may, as illustrated in Figure 2, have as one of many options for implements, a fork attachment 220 as its first loading implement. While the illustrated embodiment shows a fork attachment 220, the implement may be interchangeable with a number of alternative implements.

The fork attachment 220 may itself include one or more sensors 229. One of the one or more sensors 229 may be a camera that may be configured to provide an image feed to the display and/or from which data may be calculated in order to provide a user with, for example, height information of the forks and/or width information regarding the current distance between the forks. In the case of an image feed, the user may therefore be able to view the forks in the context of, for example, a pallet that the user wishes to lift using the forks. Such functionality may be particularly appropriate where the pallet is at a height significantly above the user in the cab of the machine and where otherwise a user may (a) require the assistance of another person at a distance from the machine that allows that person to see the pallet and forks together or (b) need to leave the cab of the machine in order to view the position of the forks relative to the pallet from an alternative perspective.

Another feature applicable to all embodiments but explained in detail with respect to the Figure 2 embodiment is implement trajectory mapping. As explained above, an experienced user may be able to make judgements regarding a future position of the implement 220 on the basis of various control inputs and how to influence that future position by altering one or more control inputs. The system of the present disclosure may be able to anticipate future positions on the basis of current inputs so as to allow users without sufficient experience to make such judgements to enjoy efficiencies.

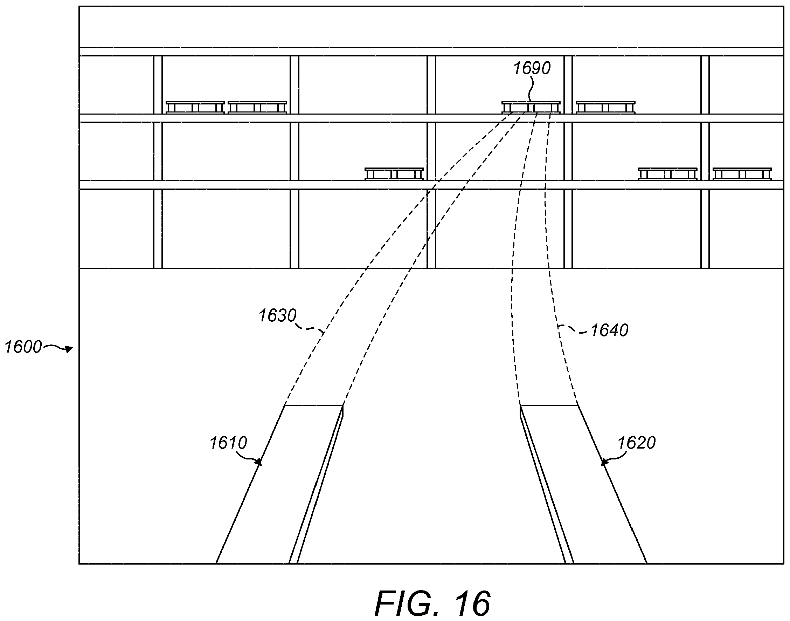

In some embodiments, one of the one or more sensors may be a camera that may be mounted on the body 230 of the machine 200 that may provide an image feed via a processor to a display. A schematic representation of such an image feed may be found in Figure 16. The image feed 1600 may show the forks 1610, 1620, or other implement, in the context of a wider angle view, showing articles in the environment surrounding the forks, perhaps including articles 1690 in the environment some distance ahead of the forks. Data relating to a steering angle of the machine may be used by the processor to calculate a trajectory of the tips in the event that the steering angle remains unchanged. Such a trajectory 1630, 1640 may be superimposed (see, for example, the dotted lines in Figure 16) on the displayed image provided by the camera (or a schematic version thereof) in order to illustrate where the tips of the forks would be located at a point in the future assuming that the steering angle input remains unchanged. In the event that the steering angle changes, the processor may update the trajectory prediction on the basis of current steering angle and display the updated trajectory in near to real time.

In some embodiments, the trajectory may be two-dimensional while in other embodiments the trajectory may be three-dimensional.

The data relating to a steering angle of the machine may be provided by a position sensor on a steering rack that controls angles of the wheels to determine an angle of the steering relative to a longitudinal direction of the machine. Alternative techniques for sensing wheel angle may also be appropriate.

In a further variation, sensor readings indicative of changes in height in the forks as controlled by the user may also be provided to the processor such that trajectory of fork position may include also an indication of a future height. In this manner, future height may be calculated and superimposed on the image provided by the camera. Again, changes in the sensor reading indicative of implement height control may be fed into the processor and the trajectory may be updated in near real time to take account of such changes.

In this way, an inexperienced user may be provided with sufficient information to be able to change the steering control and the implement height control simultaneously in order to arrive at a trajectory that meets with an article of interest. In the case of forks, a user may be in a position to change steering angle and fork height simultaneously so that the forks arrive at an appropriate position to pick up a desired pallet. The machine position and fork height may be controlled by a user on the basis of the feedback provided by the trajectory mapping element of the system such that both the machine and the forks arrive at the appropriate position in tandem. This may avoid an inexperienced user having to perform various manoeuvres in series, such as, in a first stage, positioning the machine in an appropriate position through altering the ground propulsion control, including steering, and, in a second stage started only after completion of the first stage, positioning the forks of the implement relative to the machine only after the machine is itself stationary. It also reduces the likelihood that errors in the first stage machine positioning are only identified by the user once the second stage fork lifting stage has been completed, resulting in the user having to return to the first stage of repositioning the machine altogether.

In a further variation, in the case of an implement having multiple degrees of freedom, these additional degrees of freedom may be accommodated by the trajectory mapping element of the system. Accordingly, for example, in the case of an implement capable of movement relative to the machine body in terms of height and angle, sensors in respect of the control of both of these aspects of implement position relative to the machine body may be provided to the processor for use in the trajectory mapping functionality in order to provide a user with detailed predictions of a future position of the implement based on current control inputs, and may update in near real time in the case of changes to any of those inputs.

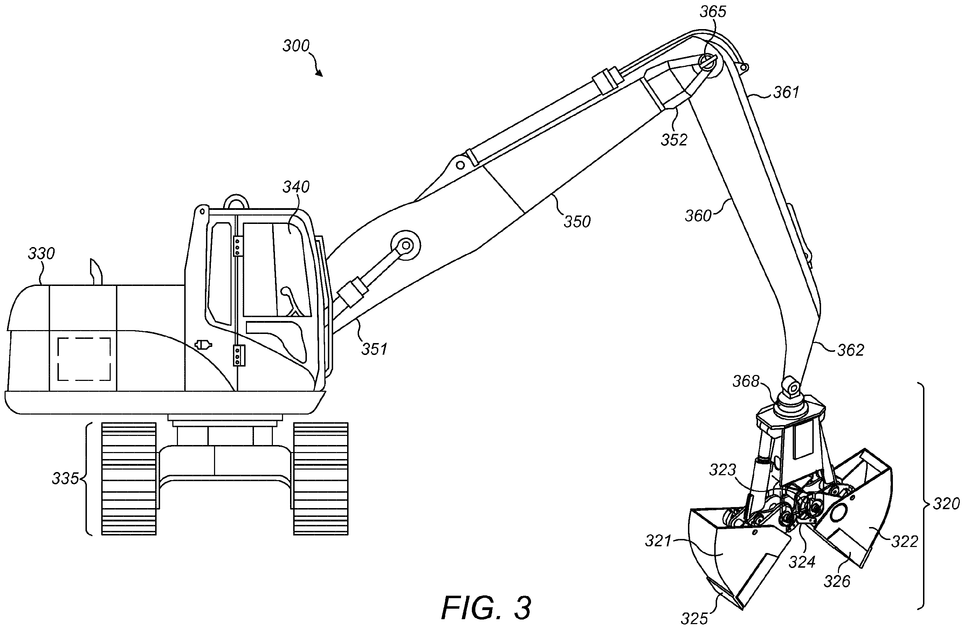

As the skilled person would appreciate, in the case of the backhoe loader exemplified by Figure 2, an embodiment of the disclosure may be used with respect to the second implement, at the rear of the machine. In the illustration, this is shown as a bucket attachment though other attachments are contemplated within the scope of the disclosure. Indeed, one such alternative implement may be a grapple, such as that described with reference to the embodiment illustrated in Figure 3.

Figure 3 shows a machine, specifically an excavator 300, having as its implement in the example figure a grapple 320. While the illustrated embodiment shows a grapple 320, the implement may be interchangeable with a number of alternative implements.

In the case of excavator 300, the degrees of freedom of the implement relative to the machine may be different from those associated with the loader bucket 120 shown in the context of the machine 100 of Figure 1 or with the forks 220 of shown in the context of the machine 200 of Figure 2.

The excavator may comprise a body 330 rotationally mounted on a drive portion 335 that may comprise tracks for ground propulsion. Rotational mounting may allow rotation about an axis that projects normal to ground on which the drive portion rests. The body 330 may comprise a cab 340 from which a user may control both ground propulsion of the excavator 300 and movement of the grapple 320 relative to the body 330.

The excavator 300 may further comprise a first arm 350 having a first end 351 and a second end 352. The first end 351 of the first arm 350 may be pivotally connected to the body 330 via a first pivot 355 (not shown). The excavator may further comprise a second arm 360 having a first end 361 and a second end 362. The first end 361 of the second arm 360 may be pivotally connected via a second pivot 365 to the second end 352 of the first arm 350. The second arm 360 may comprise an implement coupling portion 368 at the second end 362 of the second arm 360. An axis of the first pivot 355 may be parallel to an axis of the second pivot 365.

In the illustrated embodiment of Figure 3, a grapple 320 is attached to the implement coupling portion 368. The implement coupling portion 368 may be configured to enable rotational movement of the grapple 320 in a direction about an axis perpendicular to the axis of the second arm 360.

The grapple 320 may comprise a first jaw 321 and a second jaw 322. The first jaw 321 may be openable and closable relative to the second jaw 322 and vice versa via a hinging arrangement 323.

The system may comprise one or more sensors, a processor and a display visible to a user in the cab of the excavator 300. The one or more sensors may comprise a grapple camera 324 located in the grapple 320, perhaps between the two jaws 321, 322 adjacent the hinging arrangement 323 such that when the grapple jaws 321, 322 are open the camera may provide an image to include opening teeth 325, 326 of each of the two jaws 321, 322 and any article that may be in the vicinity of the teeth 325, 326. This may assist a user in aligning the jaws 321, 322 relative to the article in order to grab the article securely between the jaws 321, 322. For example, image processing software may be configured to represent the grapple (either schematically or as a live camera view) and to superimpose on the representation a projection of a future position of the grapple jaws based on current control inputs. This may be updated by the image processing software in the event that inputs change.

In addition, the embodiment of Figure 3 may comprise one or more further sensors for providing data relating to one or more of the following: control of forward, rearward and rotational movement of the tracks relative to the ground; control of the first and second arms 350, 360 about their respective pivots; a distance between the body 330 and the implement coupling portion 368: angle of rotation of the grapple 320 about a longitudinal direction of the second arm 360; grapple jaw angle representing an angle subtended from the perspective of the hinging arrangement 323 between the opening teeth 325, 326 of first and second jaws 321, 322.

Data obtained from the camera and sensors may, for example, be used to produce for display to the user a schematic representation of the grapple 320 relative to an object within view of the grapple camera 324 whose dimensions and position may be obtained from the view provided by the grapple camera 324. The schematic representation may show the grapple from an assimilated position adjacent the grapple, even though there may not be a camera at that location. Schematic representations of the implement relative to the machine body may show its position relative to other articles in the surrounding environment such as, but not limited to, obstacles that the user may have reason to want to avoid.

In addition or in the alternative, such data may be provided also be provided to a user in a variety of formats including raw distances and angles and with respect to relative scales.

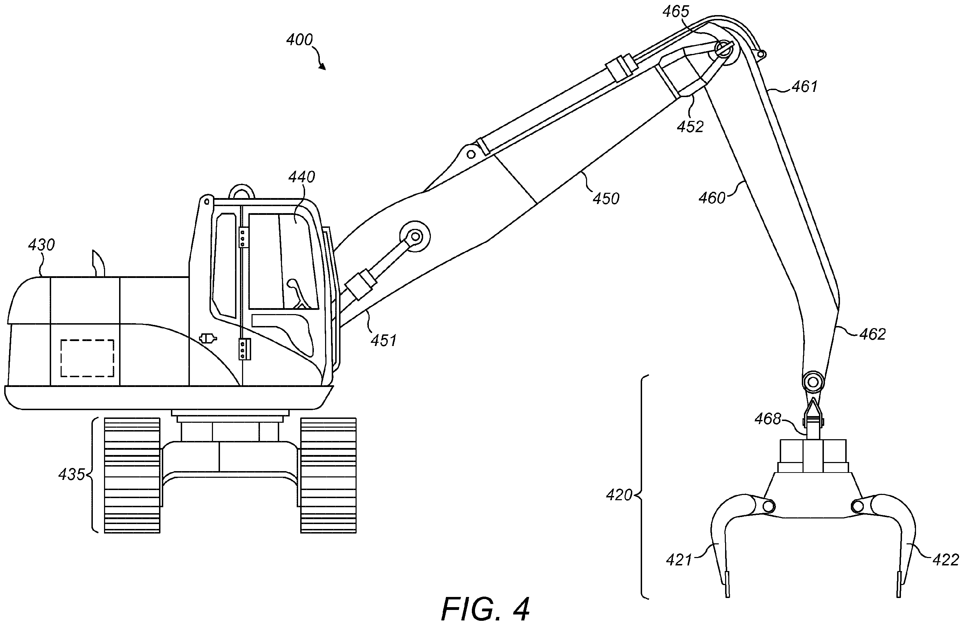

A wide variety of grapple implements are known in the art. Figure 4 shows an excavator 400 that is the same as that of Figure 3, except that the grapple 320 of Figure 3 (a grapple of a clamshell-type) is substituted for a grapple 420 of a sorting type.

Further grapples are contemplated within the scope of the disclosure. For many types of grapples, such as the sorting grapple of Figure 4, it may be particularly useful to provide trajectory information conceptually similar to that provided for the forks 220 of Figure 2. A camera may be present within the grapple, between the two jaws. The camera may provide a view of the environment directly beneath the grapple. This view may be displayed to a user on the system display. Furthermore, trajectory information obtained in a similar manner as that for the forks of Figure 2 (as shown in Figure 16) may be provided with regard to future grapple jaw positions based on current inputs.

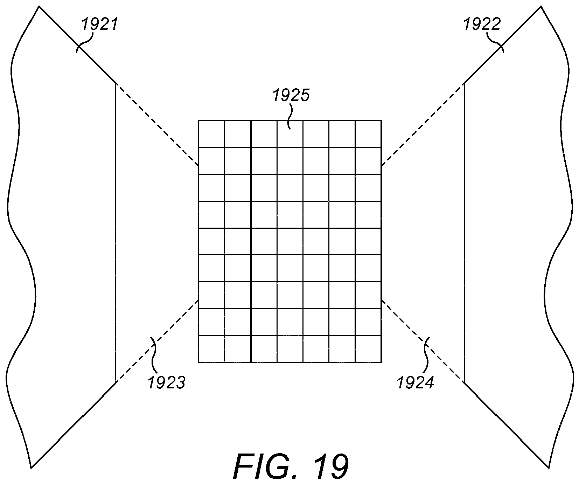

An example of the kind of image that might be displayed is shown in Figure 19. This figure shows opposing jaws 1921, 1922 of a grapple, such as the grapple of Figure 4. Also shown is a pallet of bricks 1925 as an example of an article intended to be collected by the grapple. The system of the present disclosure superimposes on the display an indication of the future trajectory of the grapple 1923, 1924 based on current inputs in order to provide the user with guidance as to how to position the grapple jaws.

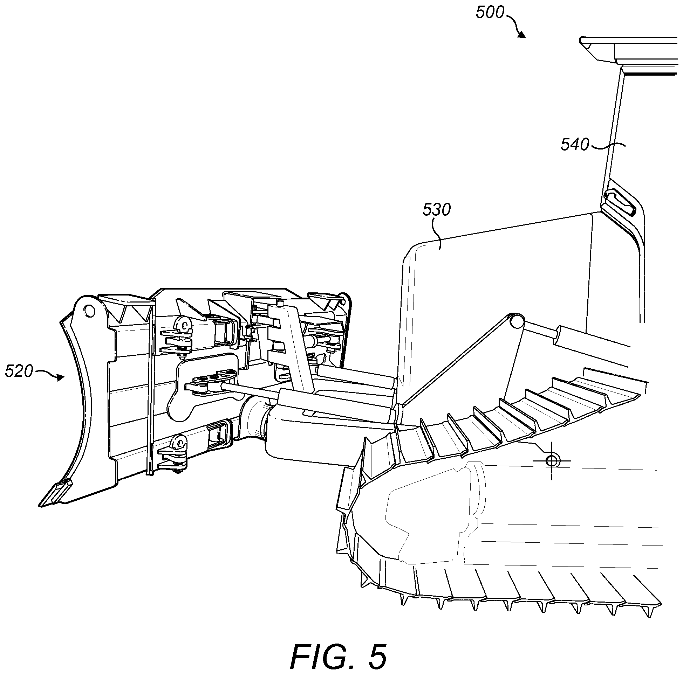

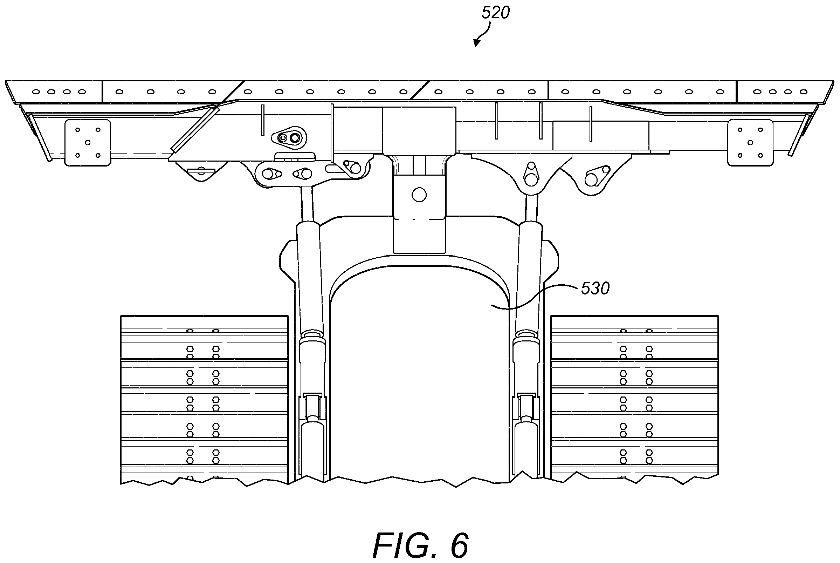

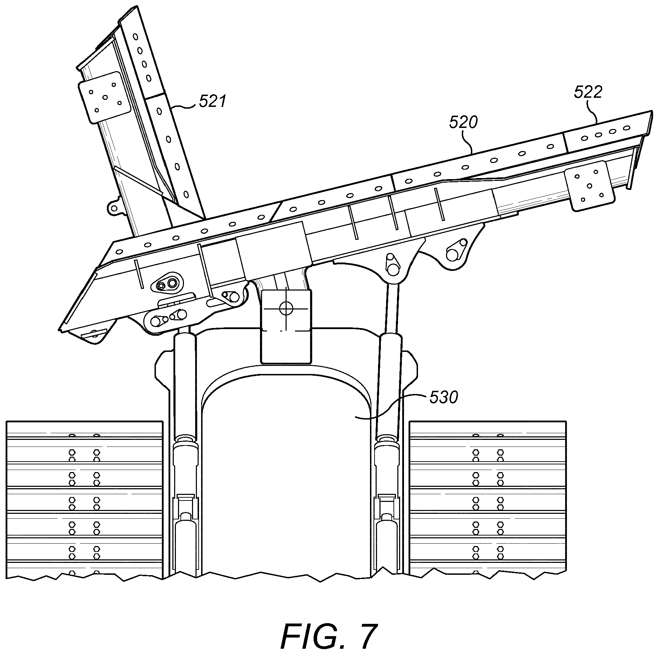

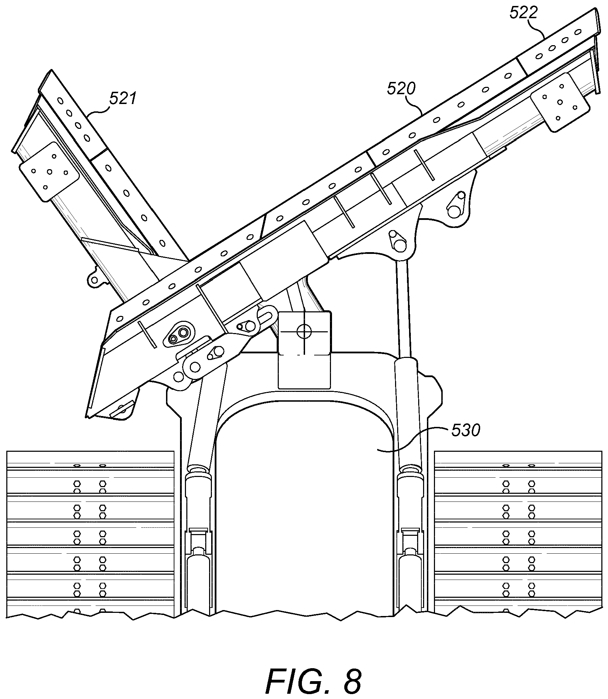

Figure 5 shows a schematic representation of a front end of a track-type tractor 500 including as its implement a blade 520. The track-type tractor 500 may comprise a body cab 540 from which a user may control ground propulsion of the track-type tractor 500 as well as movement of the blade 520 relative to the machine body. Figure 6 shows a schematic representation of the front end of the track-type tractor 500 of Figure 5 from above. The blade 520 is shown in a first, straight configuration. Figures 7 and 8 show the schematic representation of the front end of the track-type tractor 500 of Figure 6 with the blade 520 in second and third configurations, respectively.

As can be seen from the first, second and third blade configurations, the blade 520 may comprise a hinge. A first portion 521 of the blade 520 may be situated on a first side of the hinge and a second portion 522 of the blade 520 may be situated on a second side of the hinge. The hinge may enable the blade 520 to be used in a single straight blade configuration or in a folded configuration whereby the first portion 521 of the blade 520 is at an angle other than 180 ° with respect to the second portion 522 of the blade 520.

In addition, the blade 520 may be movable up and down relative to the body 530 of the track-type tractor 500. Furthermore, one side of the blade 520 may be movable up and down independently of an opposite side of the blade 520 such that the blade 520 may be lower at a first end than at a second end. Furthermore, while in Figure 5 the blade 520 is illustrated as being substantially normal to a surface on which the track-type tractor 500 is resting, an angle of tilt of the blade 520 may be altered such that the blade 520 is angled forward or backwards relative to the body 530 of the track-type tractor 500.

In this embodiment, as in the previous embodiments, sensors may be used to detect the implement type, angle, tilt, hinge position (since the blade may be substituted for another implement). Furthermore, sensors may be configured to provide data regarding machine ground propulsion control. Such sensors may include those known in the art. For example, sensors relating to speed of a machine relative to the ground are known in machines for providing data to a speedometer for display to a user. Furthermore, the sensors may be configured to feedback changes to the sensed parameters at frequent intervals. The data obtained from these sensors may be processed in a processor and used to provide information to the user via a display.

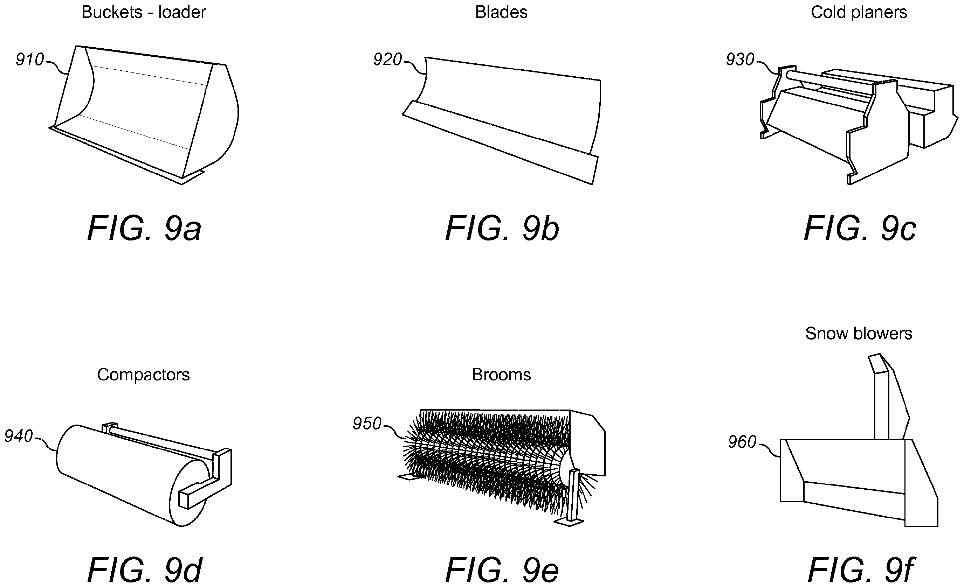

As referred to above in respect of the examples illustrated, implements may be interchangeable. This may be the case for many machines known in the art. For example, the track-type tractor of Figure 5 may, instead of a blade, have attached thereto any number of alternative implements, such as those illustrated in Figures 9a to 9f. Figure 9a shows a bucket 910, Figure 9b shows a blade 920, Figure 9c shows a cold planer 930, Figure 9d shows a compactor 940; Figure 9e shows a broom 950 and Figure 9f shows a snow blower 960. Similarly, as would be well understood by the skilled person, the backhoe loader of Figure 2 or the machine of Figure 1 might be capable of receiving any one of these implements.

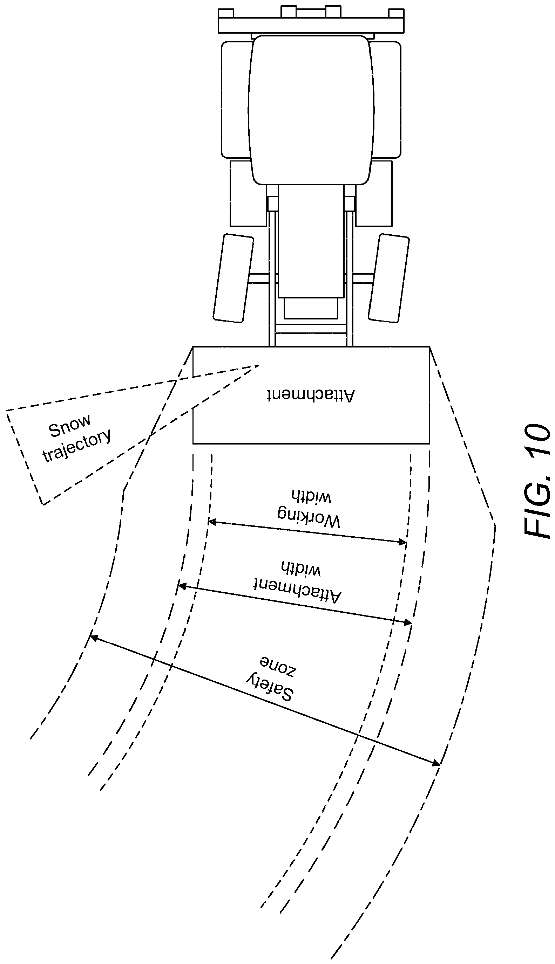

For implements such as these (and others), in one embodiment, the system of the present disclosure may provide a schematic bird's eye view of the machine in its environment on which are superimposed various representations of widths and areas relative to the implement. An example of this is shown in Figure 10.

First, the system may be configured to obtain information regarding the implement type and size. This may be obtained in any manner including that of alphanumeric recognition of a code on the implement and visible to a camera on the machine, as described above with reference to the Figure 1 embodiment.

Based on information regarding machine type, there may be superimposed onto the bird's eye view schematic representation pairs of (potentially) parallel lines representing any or all of the following:
(a) the working width of the implement (e.g., in the case of a broom, the width that would benefit from the broom);
(b) the actual width of the implement (e.g., in the case of a broom, the width of the implement including that extends beyond that which would benefit from the broom);
(c) a safety zone representing width within which it is recommended that people are avoided and that may widen with distance forward of the implement and or may widen with speed of the machine);
(d) a snow trajectory zone that may, in the case of a snow blower, indicated to a user an expected trajectory of snow affected by the snow blower dependent upon direction of output nozzle, which may be variable in three dimensions.

Other representations may also be shown, depending on the implement selected.

The information required for the Figure 10 embodiment may be obtained by a combination of the following sensors:
one or more optical cameras mounted on the machine;
one or more infrared cameras mounted on the machine to allow detection of people and animals that may be in the vicinity of the machine;
one or more sensors for detecting attachment type, such an alphanumeric recognition via a camera, barcode recognition via a camera, QR code recognition via a camera, RFID recognition via an RDIF transceiver, or any other implement detecting strategy;
one or more sensors related to machine speed, which may or may not be related to a speedometer of the machine;
one or more sensors related to machine steering control;
one or more sensors related to implement height;
one or more sensors related to implement angle;
one or more sensors related to implement tilt;
one or more sensors related to other implement factors such as extent to which jaws of an implement are open, or angles of snow blowing nozzle relative to implement, or any other implement specific variable;
any other sensor that may be used to provide data regarding machine location, machine speed, machine steering, implement movement in any direction or any other suitable sensor.

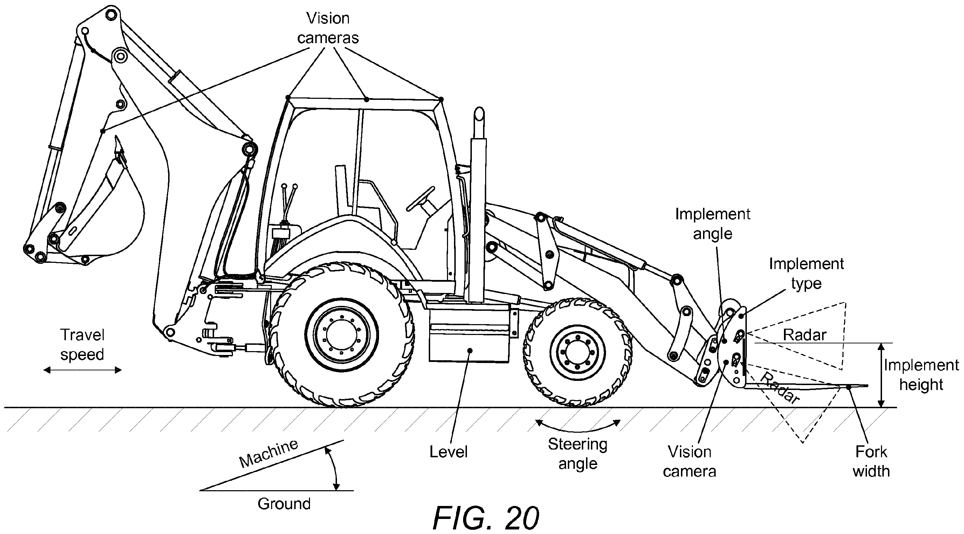

A schematic illustration of the various criteria that may be detected for use by the system of any of the embodiments illustrated herein is provided in Figure 20. While Figure 20 shows an embodiment having forks, the radar functionality may be particularly appropriate in implements such as saws.

The following is a list showing some of the variables to be sensed and, in each case, a representative example of the kind of sensor that may be used:
Type of attachment may be sensed by a camera with image processing algorithm or non-contacting inductive (RFID) sensor. Steering angle may be sensed by a non-contacting magnetic position sensor. Snow blower nozzle direction may be sensed by a non-contacting magnetic position sensor. Attachment angle may be sensed by a non-contacting magnetic position sensor. Machine speed may be sensed by a inductive or hall effect shaft rotation speed sensor. Blade angle may be sensed by a non-contacting linear position sensor. Front linkage height, tilt, and/or angle may be sensed by a non-contacting rotary magnetic position sensor. Machine level may be sensed by an accelerometer or gyroscopic inclination sensor. Fork width may be sensed by a camera with image processing algorithm. Forward radar may be sensed by a radar-based sensor with object detection algorithms. Forward (work zone) camera may be sensed by an optical camera. Downward (below ground) radar may be sensed by a radar-based sensor with object detection algorithms. 'Birds eye' camera view may be sensed by a multiple cameras with image processing / stitching functionality.

In some embodiments, the implement itself may comprise a camera configured to provide data to a user via the system of the disclosure. This may be particularly useful when aligning the implement with an article to be contacted by the implement.

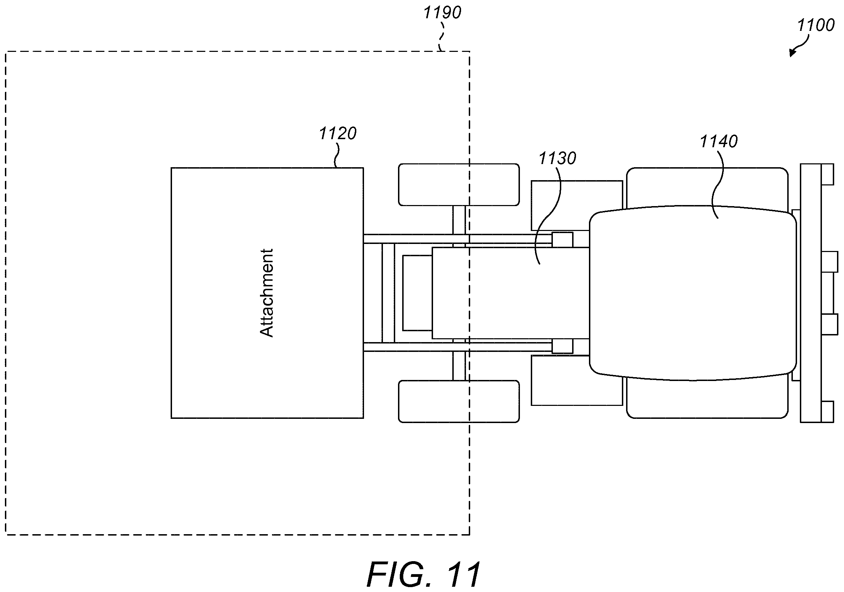

In a further embodiment, shown in Figure 11, there may be represented a safety zone around the implement that is superimposed over a schematic view of the machine and implement in context. From this and from other sensor data (perhaps including an infrared camera to allow the image processing software to interpret the presence of a person or people) it may be possible to see the position of people in the environment relative to whether they fall within or without that zone. In some variations, the system of the present disclosure may automatically prevent implement use or movement in the event that a person is detected within the safety zone.

An embodiment including a safety zone may be particularly applicable to attachments that are typically used while the machine is moving relative to its surroundings. For example, a snow blower (see Figure 9f) or a broom (Figure 9e) is, for the most part, generally used while the machine is moving relative to the ground.

There may be potential hazards associated with this. In the case of the broom 950 example, there may be a risk of debris being propelled a significant distance from the broom 950. Similarly, in the case of a snow blower 960, there may be the intention that snow is diverted in a particular direction from the snow blower 960.

In order to reduce potential hazards, it may be advisable for implements not to be used when in close proximity to people and/or particular features in the surroundings. A safe distance from an implement may depend on a number of factors including, implement type, implement specific parameters (e.g., rotational speed, in the case of a broom), position of implement relative to machine body, forward or backward propulsion speed of machine, steering position of machine, and potentially many other factors.

For example, in the case of the broom, when forward or rearward propulsion of the machine is fast, an appropriate distance from the machine may be greater than when it is slow. Similarly, when the broom is rotating fast, an appropriate distance from the machine may be greater than when it is slow. The distance may be different depending on the direction from the implement. For example, the distance may be longer in front of the implement than to the side of the implement. A safety zone may be said to be defined by a perimeter around the implement inside which it is inadvisable to enter. The size and shape of the safety zone may depend on a wide number of variables. The size and shape of the safety zone may be determined on the basis of a combination of the current input data and may be obtained, for example, from a data library or similar or calculated in the processor.

The safety zone may, in one embodiment, simply be represented schematically to a user on a display. An example of such an embodiment is shown in Figure 11. In this embodiment, the display may provide a schematic representation of a bird's eye view of the machine 1100 showing the body 1130 and implement 1120. This view may be assimilated from a plurality of sensors, as described, for example, in relation to the Figure 10 embodiment. Superimposed on the schematic representation may be a representation of the safety zone 1190. In this example, the safety zone 1190 extends a greater distance forward of the implement than rearward of the implement. It may be the case that the forward extent of the safety zone is greater when the machine or implement is operating faster.

Articles present within or without the safety zone may be represented in the bird's eye view. For example, a person might be represented, for example by an image or perhaps by an icon on the display at the position where the person is detected.

In a further embodiment, instead or in addition, the system may automatically override control of the implement (for example, rotation of a broom) in order to reduce risk in the event that an obstacle (for example, a person) is detected within the safety zone. The system may alternatively or in addition automatically override control of ground propulsion of the machine, perhaps by applying a brake to prevent ground propulsion of the machine.

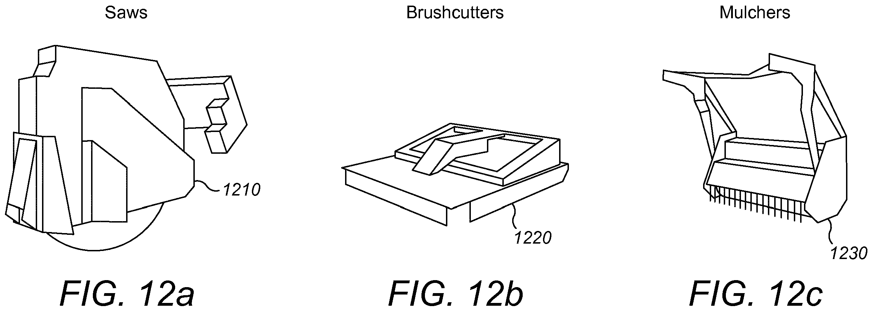

Figures 12a shows a saw 1210, Figure 12b shows a brushcutter 1220 and Figure 12c shows a mulcher 1230. Such implements, as well as some implements already described, may benefit from further data sensing regarding implement use and implement position.

For example, a saw 1210 may benefit from sensing related to a particular article that may be adjacent a saw blade in preparation for or during the process of cutting.

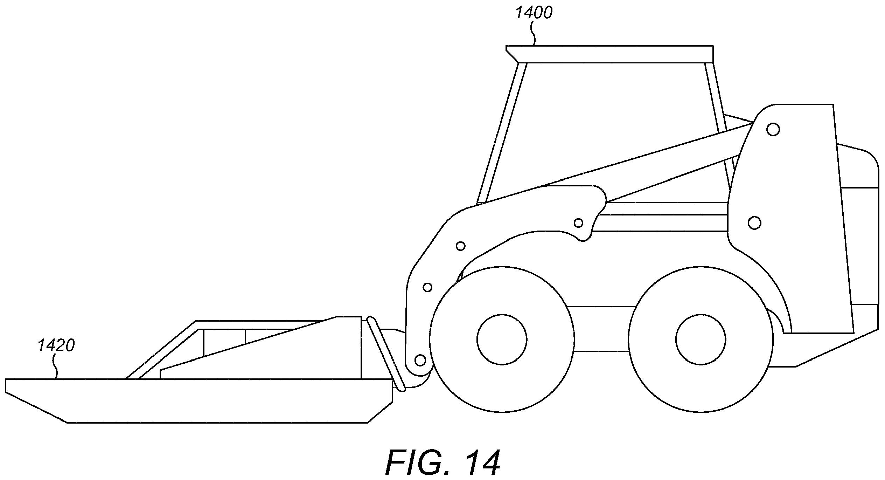

Figure 14 shows a brushcutter 1420 as an attachment to a machine of a kind known as a skid-steer loader 1400.

In some embodiments, implements may benefit from further sensing relative to the surrounding environment. For example, a saw may benefit from sensing in relation to unseen features that may be beneath or within a surface to be cut by the saw. For example, where a saw might be used to cut into a surface, it may be beneficial to detect pipes, cables, steel and other objects that may be hidden within the surface to be cut.

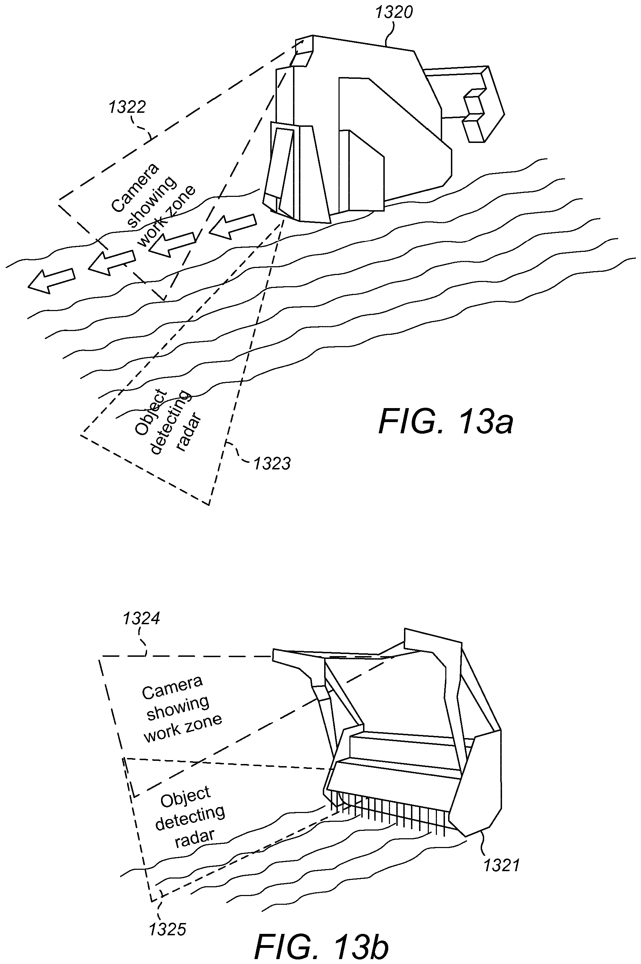

Saw implements, together with radar detection zone and optical camera focus zone are illustrated in Figures 13a and 13b.

To this end, a saw implement may be equipped with radar functionality. The radar functionality may be configured to detect objects that might include pipes, cables, steel and other objects, including those that may be hidden behind or within other objects and surfaces. The radar functionality may be provided by a radar apparatus focusable on a position of interest ahead of the current saw position. In tandem with this there may be provided an optical camera focused on the same or a similar position of interest. In this way, the processor may receive data from the radar apparatus and the optical camera and process the information in order to superimpose information obtained via those techniques onto a schematic representation of the implement and its surroundings so that a user may be provided with information to assist in controlling ground propulsion of the machine and in controlling of the implement relative to the machine body in order to determine a preferred cutting path. The sensor data may be provided in near real time and the processor may operate in near real time in order to provide the information to the user in near real time and such that the user may continuously adapt their controlling of the machine and implement to plot a preferred path for the implement relative to the surroundings, such as a surface to be cut.

In some embodiments, there may be more than one radar apparatus. For example, there may be a first radar apparatus configured to obtain information forward of the saw and relevant to forward saw trajectory plotting and there may be a second radar apparatus configured to obtain information closer to a current area of impact of the saw. In this way, there may be information provided to influence user control of forward movement of the saw as well as information provided to influence user control of the saw blade at the current position. This may be particularly effective in preventing unintentional cutting of an object just before said cutting may be due to occur.

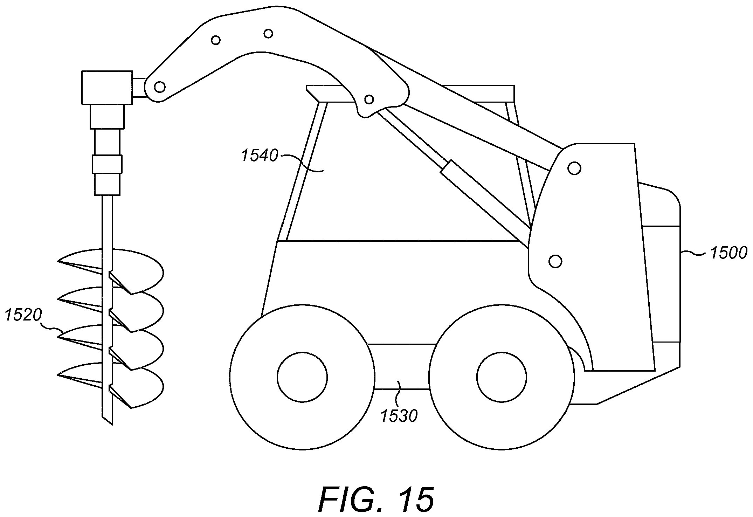

Figure 15 shows a machine, specifically of a kind known as a skid steer loader 1500 , having as its implement an auger 1520 for drilling into a surface (instead of a loader bucket, for example). In the case of some implements, including an auger, it may be helpful to a user to obtain an indication of the depth of a distal end of the auger relative to a reference point in order to be able to drill a hole of the required depth, in addition to providing information to a user regarding how to position the auger relative to the surface prior to drilling. Such information may be presented to as raw depth in formation relative to a surface or may be represented schematically on a display.

In a further embodiment of the disclosure, sensor information may be used to assist a user in positioning a machine 100 having a loading implement (such as a loader bucket 120) adjacent a truck into which the user may wish to deposit contents of the loader bucket 120. Such information may be presented to a user on a display and/or may provide the user with information in other ways such as, for example, providing an audible indication when a part of the machine or implement comes within a particular distance of the truck. In some embodiments, there may be active braking that engages a brake of the machine in order to prevent a collision. It may, alternatively or in addition, prevent a user from further movement of an implement where such movement would follow a trajectory that would result in a collision of the implement with, for example, a side of the truck.

While various implements have been disclosed in relation to various machine types, it will of course be appreciated by the skilled person that the specific machine-implement combinations described and illustrated herein are merely indicative. To the extent that an implement is compatible for attachment to a particular machine, the system of the present disclosure may be equally applicable to that implement-machine combination.

For example, the disclosure may be equally applicable to machines having any kind of ground propulsion known in the art. The system may use input data regarding ground propulsion without knowledge of how that ground propulsion may be achieved. Accordingly, any particular embodiment of the disclosure is not limited to whether the machine with which it operates is propelled by wheels, tracks, a combination of the two or any other means. Other means of ground propulsion than those explicitly recited herein are known in the art.

The disclosure may be applicable to a machine having a wide range of different implement possibilities. The implement may be permanently attached to a particular machine or couplable to the machine, and therefore substitutable for one or more of a further range of implements.

While some particular combinations of sensors and inputs have been disclosed in relation to specific embodiments, the skilled person would appreciate that the different combinations of sensors and inputs may be applicable to different embodiments of machine and implement. The disclosure is not to be understood as limited to the specific combination of sensors and inputs disclosed in respect of the specific machines and implements. Any combination of sensors and inputs may be equally applicable to any combination of machine and implement.

### Industrial Applicability

The present disclosure finds application in improving the efficient use of a machine, particularly though not exclusively by an inexperienced user.

## Claims

1. A machine (100, 200) of a kind comprising a body (130, 230, 330) and an implement (120, 220, 320), the machine (100) comprising a system configured to define a safety zone (1190) in the vicinity of the implement (120, 220, 320), the system comprising:
a processor configured to receive a plurality of system inputs and to deliver a system output comprising criteria that define a position and one or more dimensions of the safety zone; and
wherein the plurality of system inputs comprises:
(a) first system input data relating to a type and/or a dimension of the implement;
(b) second system input data relating to a current position of the implement;
(c) third system input data relating to user input control of a first type that governs ground propulsion of the machine; and
(d) fourth system input data relating to user input control of a second type that governs movement of the implement relative to the body and operation of the implement;
wherein the processor is configured to process the plurality of system inputs in order to determine the system output, wherein the system output represents guidance in relation to a future trajectory of the safety zone (1190), wherein the future trajectory is calculated based on current system input data;
**characterized in that**, the machine further comprising a data library including data corresponding to values for each of the first, second and third system input data and, for each combination of input data values, a corresponding output data value, wherein the step of processing the plurality of inputs in order to determine the system output comprises searching the data library for an output data value that corresponds with the first, second and third system input data values.

2. The machine (100, 200) of claim 1 wherein the processor is configured to compute a function, the function having a plurality of function inputs and one or more function outputs and wherein the processor is configured to transfer the plurality of system inputs to the function inputs and to deliver as the system output the one or more function outputs.

3. The machine (100, 200) of any preceding claim further comprising one or more sensors configured for obtaining at least some of the plurality of input data.

4. The machine (100, 200) of claim 3 wherein the one or more sensors includes one or more cameras (324).

5. The machine (100, 200) of claim 4 wherein the one or more cameras comprises a camera (324) located so as to provide an image of an implement (120, 220, 320) that may be connected to an implement coupling of the machine (100, 200).

6. The machine (100, 200) of claim 3 or any claim dependent on claim 4 wherein one or more of the sensors is located on an implement (120, 220, 320) configured to be couplable to a machine (100, 200).

7. The machine (100, 200) of any preceding claim and further comprising a display, wherein the display is configured to receive and display the criteria that define the position and one or more dimensions of the safety zone.

8. The machine (100, 200) of claim 7 wherein the display is configured to show the position and one or more dimensions of the safety zone in the context of a bird's eye view representation of the machine and articles in the vicinity of the machine as determined from the data received by the one or more system inputs.

9. The machine (100, 200) of claim 8 wherein the one or more sensors includes one or more sensors for detecting presence of one or more persons and wherein the processor is configured to represent a position of the person thereby detected on the display.

10. The machine (100, 200) of claim 9 wherein the one or more sensors for detecting presence of one or more persons includes an infra-red sensor.

11. The machine (100, 200) of claim 4 or any claim dependent on claim 4 wherein the first input data relating to a type and/or a dimension of the implement are obtained by configuring the processor to:
obtain an image from one of the one or more cameras wherein said image includes an area of interest on an implement connected to the machine, wherein the area of interest is an area that is expected to show one or more alphanumeric characters;
use an alphanumeric recognition technique, to recognise the one or more alphanumeric characters;
search for the combination of one or more alphanumeric characters in a data library and obtaining from a part of the data library associated with the combination of one or more alphanumeric characters data stored in the data library in relation to the implement including one or more of the following:
implement type;
implement dimension or dimensions;
degrees of freedom of implement or components of implement;
other data relating to the implement.

12. The machine (100, 200) of claim 3 or any claim dependent on claim 3 wherein the first input data relating to a type and/or a dimension of the implement are obtained by configuring the processor to:
obtain information for identifying the implement using one or more of the following techniques:
image recognition;
bar code recognition;
QR code recognition;
RFID detection;
search in a data library and obtain from a part of the data library associated with the information obtained for data stored in the data library in relation to the implement including one or more of the following:
implement type;
implement dimension or dimensions;
degrees of freedom of implement or components of implement;
other data relating to the implement.

## Patentansprüche

1. Maschine (100, 200) der Art, die einen Körper (130, 230, 330) und ein Arbeitsgerät (120, 220, 320) umfasst, wobei die Maschine (100) ein System umfasst, das so ausgelegt ist, dass es eine Sicherheitszone (1190) in der Nähe des Arbeitsgeräts (120, 220, 320) definiert, wobei das System umfasst:
einen Prozessor, der so ausgelegt ist, dass er eine Vielzahl von Systemeingaben empfängt und eine Systemausgabe liefert, die Kriterien umfasst, die eine Position und eine oder mehrere Abmessungen der Sicherheitszone definieren; und
wobei die Vielzahl von Systemeingaben umfasst:
(a) erste Systemeingabedaten, die sich auf einen Typ und/oder eine Abmessung des Arbeitsgeräts beziehen;
(b) zweite Systemeingabedaten, die sich auf eine aktuelle Position des Arbeitsgeräts beziehen;
(c) dritte Systemeingabedaten, die sich auf die Benutzereingabesteuerung eines ersten Typs beziehen, der den Bodenantrieb der Maschine regelt; und
(d) vierte Systemeingabedaten, die sich auf die Benutzereingabesteuerung eines zweiten Typs beziehen, der die Bewegung des Arbeitsgeräts in Bezug auf den Körper und den Betrieb des Arbeitsgeräts regelt;
wobei der Prozessor so ausgelegt ist, dass er die Vielzahl von Systemeingaben verarbeitet, um die Systemausgabe zu bestimmen, wobei die Systemausgabe eine Führung in Bezug auf eine zukünftige Bahn der Sicherheitszone (1190) darstellt, wobei die zukünftige Bahn basierend auf aktuellen Systemeingabedaten berechnet wird;
**dadurch gekennzeichnet, dass**
die Maschine ferner eine Datenbibliothek umfasst, die Daten einschließt, die Werten jeweils für die ersten, zweiten und dritten Systemeingabedaten und für jede Kombination von Eingabedatenwerten einem entsprechenden Ausgabedatenwert entsprechen, wobei der Schritt des Verarbeitens der Vielzahl von Eingaben zum Bestimmen der Systemausgabe das Durchsuchen der Datenbibliothek nach einem Ausgabedatenwert umfasst, der den ersten, zweiten und dritten Systemeingabedatenwerten entspricht.

2. Maschine (100, 200) nach Anspruch 1, wobei der Prozessor so ausgelegt ist, dass er eine Funktion berechnet, wobei die Funktion eine Vielzahl von Funktionseingaben und einen oder mehrere Funktionsausgaben aufweist, und wobei der Prozessor so ausgelegt ist, dass er die Vielzahl von Systemeingaben an die Funktionseingaben überträgt und die eine oder die mehreren Funktionsausgaben als die Systemausgabe bereitstellt.

3. Maschine (100, 200) nach einem der vorstehenden Ansprüche, ferner umfassend einen oder mehrere Sensoren, die so ausgelegt sind, dass sie mindestens einige der Vielzahl von Eingabedaten erhalten.

4. Maschine (100, 200) nach Anspruch 3, wobei der eine oder die mehreren Sensoren eine oder mehrere Kameras (324) einschließen.

5. Maschine (100, 200) nach Anspruch 4, wobei die eine oder die mehreren Kameras eine Kamera (324) umfassen, die so angeordnet ist, dass sie ein Bild eines Arbeitsgeräts (120, 220, 320) bereitstellt, das mit einer Arbeitsgerätekupplung der Maschine (100, 200) verbunden sein kann.

6. Maschine (100, 200) nach Anspruch 3 oder einem von Anspruch 4 abhängigen Anspruch, wobei sich einer oder mehrere der Sensoren an einem Arbeitsgerät (120, 220, 320) befinden, das so ausgelegt ist, dass es mit einer Maschine (100, 200) koppelbar ist.

7. Maschine (100, 200) nach einem der vorstehenden Ansprüche und ferner umfassend eine Anzeige, wobei die Anzeige so ausgelegt ist, dass sie die Kriterien empfängt und anzeigt, die die Position und eine oder mehrere Abmessungen der Sicherheitszone definieren.

8. Maschine (100, 200) nach Anspruch 7, wobei die Anzeige so ausgelegt ist, dass sie die Position und eine oder mehrere Abmessungen der Sicherheitszone im Rahmen einer Darstellung der Maschine aus der Vogelperspektive anzeigt und Gegenstände in der Umgebung der Maschine anzeigt, wie sie aus den Daten ermittelt werden, die von der einen oder den mehreren Systemeingaben empfangen werden.

9. Maschine (100, 200) nach Anspruch 8, wobei der eine oder die mehreren Sensoren einen oder mehrere Sensoren zum Erfassen der Anwesenheit einer oder mehrerer Personen einschließen und wobei der Prozessor so ausgelegt ist, dass er eine Position der dadurch erfassten Person auf der Anzeige darstellt.

10. Maschine (100, 200) nach Anspruch 9, wobei der eine oder die mehreren Sensoren zum Erfassen der Anwesenheit einer oder mehrerer Personen einen Infrarotsensor einschließen.

11. Maschine (100, 200) nach Anspruch 4 oder einem von Anspruch 4 abhängigen Anspruch, wobei die ersten Eingabedaten, die sich auf einen Typ und/oder eine Abmessung des Arbeitsgeräts beziehen, erhalten werden, indem der Prozessor so ausgelegt wird:
dass er ein Bild von einer der einen oder mehreren Kameras erhält, wobei das Bild einen Bereich von Interesse auf einem mit der Maschine verbundenen Arbeitsgerät einschließt, wobei es sich bei dem Bereich von Interesse um einen Bereich handelt, der voraussichtlich ein oder mehrere alphanumerische Zeichen aufweist;
dass er eine alphanumerische Erkennungstechnik verwendet, um das eine oder die mehreren alphanumerischen Zeichen zu erkennen;
dass er nach der Kombination eines oder mehrerer alphanumerischer Zeichen in einer Datenbibliothek sucht und aus einem Teil der Datenbibliothek, der mit der Kombination eines oder mehrerer alphanumerischer Zeichen verbunden ist, Daten erhält, die in der Datenbibliothek in Bezug auf das Arbeitsgerät gespeichert sind, einschließlich eines oder mehrerer der folgenden:
Arbeitsgerätetyp;
Abmessung oder Abmessungen des Arbeitsgeräts;
Freiheitsgrade des Arbeitsgeräts oder der Komponenten des Arbeitsgeräts;
sonstige Daten in Bezug auf das Arbeitsgerät.

12. Maschine (100, 200) nach Anspruch 3 oder einem von Anspruch 3 abhängigen Anspruch, wobei die ersten Eingabedaten, die sich auf einen Typ und/oder eine Abmessung des Arbeitsgeräts beziehen, erhalten werden, indem der Prozessor so ausgelegt wird:
dass er Informationen zum Erkennen des Arbeitsgeräts unter Verwendung eines oder mehrerer der folgenden Verfahren erhält:
Bilderkennung;
Strichcode-Erkennung;
QR-Code-Erkennung;
RFID-Erkennung;
dass er in einer Datenbibliothek sucht und aus einem Teil der Datenbibliothek, der mit den Informationen verbunden ist, die für in der Datenbibliothek gespeicherte Daten in Bezug auf das Arbeitsgerät erhalten wurden, eines oder mehrere der folgenden erhält:
Arbeitsgerätetyp;
Abmessung oder Abmessungen des Arbeitsgeräts;
Freiheitsgrade des Arbeitsgeräts oder der Komponenten des Arbeitsgeräts;
sonstige Daten in Bezug auf das Arbeitsgerät.

## Revendications

1. Machine (100, 200) d'un genre comprenant un corps (130, 230, 330) et un outil (120, 220, 320), la machine (100) comprenant un système configuré pour définir une zone de sécurité (1190) à proximité de l'outil (120, 220, 320), le système comprenant :
un processeur configuré pour recevoir une pluralité d'entrées de système et pour délivrer une sortie de système comprenant des critères qui définissent une position et une ou plusieurs dimensions de la zone de sécurité ; et
dans lequel la pluralité d'entrées de système comprend :
(a) des premières données d'entrée de système relatives à un type et/ou une dimension de l'outil ;
(b) des deuxièmes données d'entrée de système relatives à une position actuelle de l'outil ;
(c) des troisièmes données d'entrée de système relatives à une commande d'entrée utilisateur d'un premier type qui gouverne la propulsion terrestre de la machine ; et
(d) des quatrièmes données d'entrée de système relatives à une commande d'entrée utilisateur d'un deuxième type qui gouverne le mouvement de l'outil par rapport au corps et au fonctionnement de l'outil ;
dans laquelle le processeur est configuré pour traiter la pluralité d'entrées de système afin de déterminer la sortie de système, dans laquelle la sortie de système représente une orientation par rapport à une future trajectoire de la zone de sécurité (1190), dans laquelle la future trajectoire est calculée en fonction de données d'entrée de système actuelles ;
**caractérisée en ce que,**
la machine comprenant en outre une bibliothèque de données incluant des données correspondant à des valeurs pour chacune des premières, deuxièmes et troisièmes données d'entrée de système et, pour chaque combinaison de valeurs de données d'entrée, une valeur de données de sortie correspondante, dans laquelle l'étape de traitement de la pluralité d'entrées afin de déterminer la sortie de système comprend la recherche dans la bibliothèque de données d'une valeur de données de sortie qui correspond aux premières, deuxièmes et troisièmes valeurs de données d'entrée de système.

2. Machine (100, 200) selon la revendication 1 dans laquelle le processeur est configuré pour calculer une fonction, la fonction ayant une pluralité d'entrées de fonction et une ou plusieurs sorties de fonction et dans laquelle le processeur est configuré pour transférer la pluralité d'entrées de système aux entrées de fonction et pour délivrer comme sortie de système les une ou plusieurs sorties de fonction.

3. Machine (100, 200) selon l'une quelconque des revendications précédentes, comprenant en outre un ou plusieurs capteurs configurés pour obtenir au moins certaines de la pluralité de données d'entrée.

4. Machine (100, 200) selon la revendication 3 dans laquelle les un ou plusieurs capteurs incluent une ou plusieurs caméras (324).

5. Machine (100, 200) selon la revendication 4 dans laquelle les une ou plusieurs caméras comprennent une caméra (324) située de manière à fournir une image d'un outil (120, 220, 320) qui peut être connecté à un couplage d'outil de la machine (100, 200).

6. Machine (100, 200) selon la revendication 3 ou l'une quelconque des revendications dépendant de la revendication 4 dans laquelle un ou plusieurs des capteurs sont situés sur un outil (120, 220, 320) configuré pour pouvoir être couplé à une machine (100, 200).

7. Machine (100, 200) selon l'une quelconque des revendications précédentes et comprenant en outre un affichage, dans laquelle l'affichage est configuré pour recevoir et afficher les critères qui définissent la position et une ou plusieurs dimensions de la zone de sécurité.

8. Machine (100, 200) selon la revendication 7 dans laquelle l'affichage est configuré pour afficher la position et une ou plusieurs dimensions de la zone de sécurité dans le contexte d'une représentation visuelle en vue panoramique de la machine et des articles à proximité de la machine telles que déterminées à partir des données reçues par les une ou plusieurs entrées de système.

9. Machine (100, 200) selon la revendication 8 dans laquelle les un ou plusieurs capteurs incluent un ou plusieurs capteurs pour détecter la présence d'une ou plusieurs personnes et dans laquelle le processeur est configuré pour représenter une position de la personne de ce fait détectée sur l'affichage.

10. Machine (100, 200) selon la revendication 9 dans laquelle les un ou plusieurs capteurs pour détecter la présence d'une ou plusieurs des personnes incluent un capteur infrarouge.

11. Machine (100, 200) selon la revendication 4 ou l'une quelconque des revendications dépendant de la revendication 4 dans laquelle les premières données d'entrée relatives à un type et/ou une dimension de l'outil sont obtenues en configurant le processeur pour :
obtenir une image à partir de l'une des une ou plusieurs caméras dans laquelle ladite image inclut une zone d'intérêt sur un outil connecté à la machine, dans laquelle la zone d'intérêt est une zone qui est prévue pour afficher un ou plusieurs caractères alphanumériques ;
utiliser une technique de reconnaissance alphanumérique, pour reconnaître les un ou plusieurs caractères alphanumériques ;
rechercher la combinaison d'un ou plusieurs caractères alphanumériques dans une bibliothèque de données et obtenir à partir d'une partie de la bibliothèque de données associée à la combinaison d'un ou plusieurs caractères alphanumériques des données stockées dans la bibliothèque de données en relation avec l'outil incluant un ou plusieurs des éléments suivants :
type d'outil ;
dimension ou dimensions de l'outil ;
degrés de liberté de l'outil ou de composants de l'outil ;
autres données relatives à l'outil.

12. Machine (100, 200) selon la revendication 3 ou l'une quelconque des revendications dépendant de la revendication 3 dans laquelle les premières données d'entrée relatives à un type et/ou une dimension de l'outil sont obtenues en configurant le processeur pour :
obtenir des informations pour l'identification de l'outil en utilisant une ou plusieurs des techniques suivantes :
reconnaissance d'image ;
reconnaissance de code-barres ;
reconnaissance de code QR ;
détection RFID ;
rechercher dans une bibliothèque de données et obtenir à partir d'une partie de la bibliothèque de données associée aux informations obtenues des données stockées dans la bibliothèque de données en relation avec l'outil incluant un ou plusieurs des éléments suivants :
type d'outil ;
dimension ou dimensions de l'outil ;
degrés de liberté de l'outil ou de composants de l'outil ;
autres données relatives à l'outil.
